# EUROPEAN PATENT APPLICATION

(11) **EP 1 707 271 A2**
(43) Date of publication of application: **04.10.2006**
(21) Application number: 06251626.5
(22) Date of filing: 27.03.2006
(51) Int. Cl.: B03C 1/033, H01L 41/20, H01F 1/147

(54) **Method and apparatus for magnetizing metal**

(30) Priority: 31.03.2005 JP 2005101317
(71) Applicant: ASAHI INTECC CO., LTD., Nagoya-shi, Aichi 463-0024 (JP)
(72) Inventor: Ozawa, Shinji, c/o Asahi Intecc Co., Ltd., Nagoya-shi Aichi 463-0024 (JP)
(74) Representative: Paget, Hugh Charles Edward

(57) **Abstract**

A method of magnetizing metal, characterized by comprising the steps of positioning metal to be magnetized in a magnetic field produced by magnetic vector potential; and positioning, in the magnetic field, at least one magnetic-vector-potential inductor which induces the magnetic vector potential, such that the at least one magnetic-vector-potential inductor is located adjacent to the metal for magnetizing the metal, the at least one magnetic-vector-potential inductor having relative permeability whose absolute value is larger than an absolute value of relative permeability of the metal.

## Description

The present application is based on Japanese Patent Application No. 2005-101317 filed on March 31, 2005, the contents of which are incorporated herein by reference.

### BACKGROUND OF THE INVENTION

### Field of the Invention

The present invention relates in general to a method and an apparatus for magnetizing metal and a method of separating metal. The invention relates in particular to such a method of magnetizing suitable metal utilizing magnetic vector potential, a magnetizing apparatus advantageously used in practicing the method, and a separating method utilizing the magnetizing method.

### Discussion of Related Art

As well known, metal components having magnetism, i.e., magnetic metal components are widely used in various machines, electronic equipment, communication apparatus, medical equipment or instruments, and the like. The magnetic metal components are generally produced by positioning metal components or metal materials which are not magnetic in a magnetic field produced using a condenser-type magnetizing device, strong permanent magnets or the like, thereby magnetizing the metal components or materials.

In such a generally employed magnetizing method, however, it is difficult or impossible to magnetize specific metal, e.g., a simple substance of various kinds of metal such as gold or silver constituted by a single element, a simple substance of various kinds of thermally demagnetized metal, certain kinds of alloy such as austenitic-stainless steel, and ions and colloids of various kinds of metal.

Therefore, the metal components to be used in various devices and equipment are inevitably limited. In the meantime, in separating metal from a substance in which both of metal and nonmetal are present or a mixture thereof, there is known a technique of attracting the metal by magnetic force and thereby separating the metal. However, such a technique of separating metal cannot be applied to the above-indicated specific metal which is difficult or impossible to be magnetized by the generally employed magnetizing method described above. As apparent from the foregoing description, it is to be understood that "metal" in this specification is interpreted as including simple substances of metal (hereinafter may be referred to as "metal simple substances" where appropriate), alloys, intermetallic compounds, metal ions, and metal colloids.

### SUMMARY OF THE INVENTION

The present invention has been made in the light of the background situations noted above. It is therefore an object of the invention to provide a method of magnetizing metal that allows easy and efficient magnetization of metal which is conventionally deemed difficult or impossible to be magnetized. It is another object of the invention to provide an apparatus for magnetizing metal advantageously used in the magnetizing method. It is still another object of the invention to provide a method of selectively separating metal utilizing the magnetizing method.

The inventor of the present invention focused, in the process of study for attaining the objects indicated above, on magnetic vector potential which is hardly put to practical use though its existence has been already proved.

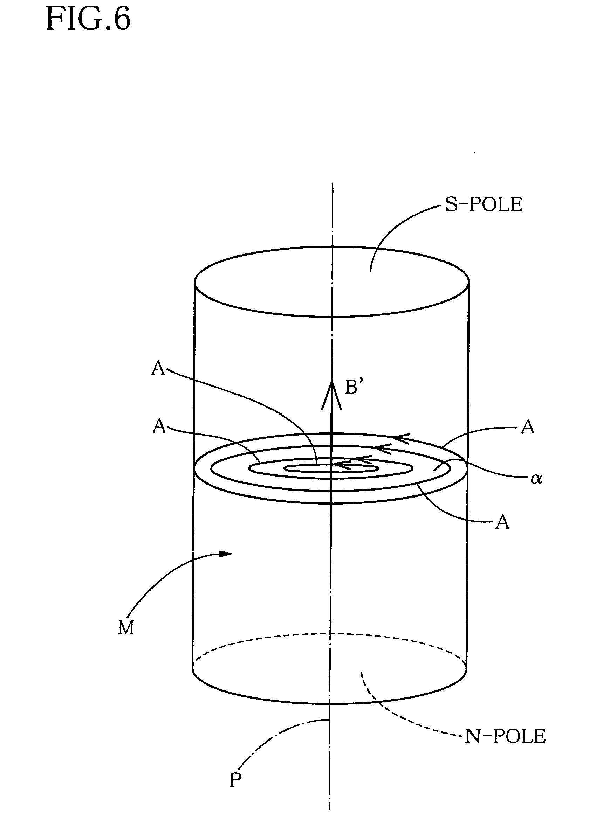

As well known, where magnetic flux density and magnetic vector potential are represented as B and A, respectively, the magnetic flux density B satisfies the following equation: div B=0, and the magnetic vector potential A is defined as follows: B=rot A. Namely, as shown in Fig. 6, in a magnet M whose lower end face is the N-pole and upper end face is the S-pole, the magnetic vector potential A is generated about the center axis P of the magnet M so as to rotate in a clockwise direction in a state wherein the S-pole side is viewed from the N-pole side. Magnetic flux B' is generated with a direction from the N-pole toward the S-pole and parallel to the center axis P, such that the magnetic flux B' penetrates a center of a plane α which is formed by the magnetic vector potential A and which is perpendicular to the center axis P.

As well known, magnetism originates in spin magnetic moment of electrons. As conditions for a magnetic body per se to have magnetism, it is essential that quantum-mechanical cooperative action between atoms works owing to exchange interaction. It is considered that the magnetic vector potential generates a stable magnetic structure capable of maintaining the exchange interaction.

Accordingly, the inventor estimated that the metal which is conventionally deemed difficult or impossible to be magnetized can be easily magnetized by effectively utilizing the magnetic vector potential and applying the magnetic vector potential to the metal with high reliability. The inventor made an extensive study based on the estimation. The result of the study brought the following findings: By positioning, in a magnetic field produced by the magnetic vector potential, metal to be magnetized and a magnetic-vector-potential inductor which induces the magnetic vector potential and which has prescribed relative permeability, with a specific disposition form, the magnetic vector potential can be effectively applied to the metal to be magnetized, whereby the metal can be effectively magnetized with high efficiency.

The present invention has been completed based on the findings noted above and provides a method of magnetizing metal, comprising the steps of positioning metal to be magnetized in a magnetic field produced by magnetic vector potential; and positioning, in the magnetic field, at least one magnetic-vector-potential inductor which induces the magnetic vector potential, such that the at least one magnetic-vector-potential inductor is located adjacent to the metal for magnetizing the metal, the at least one magnetic-vector-potential inductor having relative permeability whose absolute value is larger than an absolute value of relative permeability of the metal.

In the above-indicated method of separating metal according to the present invention, the at least one magnetic-vector-potential inductor is used which has relative permeability whose absolute value is larger than an absolute value of relative permeability of the metal to be magnetized. Accordingly, the magnetic vector potential can be more efficiently induced and applied to the metal more intensely. Further, because the at least one magnetic-vector-potential inductor is located adjacent to the metal in the magnetic field, a cancellation amount among the magnetic vector potential acting on portions of the metal is effectively reduced. Therefore, the magnetic vector potential can effectively act on the metal in the magnetic field. It is noted that the magnetic-vector-potential inductor which is located adjacent to the metal to be magnetized may be in contact or out of contact with the metal.

Thus, the present method of magnetizing metal permits easy and efficient magnetization of lots of metal which is conventionally deemed difficult or impossible to be magnetized.

### FORMS OF THE INVENTION

The present invention is preferably practiced in at least the following various forms.

(1) A method of magnetizing metal, comprising the steps of positioning metal to be magnetized in a magnetic field produced by magnetic vector potential; and positioning, in the magnetic field, at least one magnetic-vector-potential inductor which induces the magnetic vector potential, such that the at least one magnetic-vector-potential inductor is located adjacent to the metal for magnetizing the metal, the at least one magnetic-vector-potential inductor having relative permeability whose absolute value is larger than an absolute value of relative permeability of the metal.

(2) The method according to the above-indicated form (1), wherein the absolute value of the relative permeability of the at least one magnetic-vector-potential inductor is not larger than 1000000 times the absolute value of the relative permeability of the metal to be magnetized.

According to the above-indicated form (2), the magnetic vector potential can be induced by the at least one magnetic-vector-potential inductor with higher efficiency, thereby enabling the magnetic vector potential to act, more intensely, on the metal to be magnetized. Therefore, this arrangement permits easy and efficient magnetization of lots of metal which is conventionally deemed difficult or impossible to be magnetized. For obtaining such effect with higher reliability, it is desirable that the absolute value of the relative permeability of the magnetic-vector-potential inductor is not smaller than 10 times the absolute value of the relative permeability of the metal to be magnetized and not larger than 1000000 times the absolute value of the relative permeability of the metal.

(3) The method according to the above-indicated form (1), wherein the at least one magnetic-vector-potential inductor is superposed on the metal to be magnetized in a direction perpendicular to a plane formed by the magnetic vector potential, so that the at least one magnetic-vector-potential inductor is located adjacent to the metal so as to be in contact therewith in the magnetic field.

(4) The method according to the above-indicated form (1), wherein the at least one magnetic-vector-potential inductor is opposed to the metal to be magnetized in a direction perpendicular to a plane formed by the magnetic vector potential, so that the at least one magnetic-vector-potential inductor is located adjacent to the metal so as to be out of contact therewith.

According to the above-indicated forms (3) and (4), the magnetic vector potential can be induced more efficiently by the at least one magnetic-vector-potential inductor, so that the magnetic vector potential can act more intensely on the metal to be magnetized. Further, these arrangements more effectively reduce the cancellation amount among the magnetic vector potential acting on portions of the metal, resulting in more reliable and efficient magnetization of lots of metal which is so far deemed difficult or impossible to be magnetized.

(5) The method according to the above-indicated form (1), wherein the at least one magnetic-vector-potential inductor encloses the metal to be magnetized, so that the at least one magnetic-vector-potential inductor is located adjacent to the metal.

(6) The method according to the above-indicated form (1), wherein the at least one magnetic-vector-potential inductor is enclosed with the metal to be magnetized, so that the at least one magnetic-vector-potential inductor is located adjacent to the metal.

According to the above-indicated forms (5) and (6), the magnetic vector potential can be applied to the metal more intensely and more sufficiently, resulting in further reliable and efficient magnetization of lots of metal which is conventionally deemed difficult or impossible to be magnetized.

(7) The method according to the above-indicated form (1), wherein the magnetic field is produced by the magnetic vector potential generated using at least one permanent magnet.

Unlike an arrangement in which an electromagnet is used, the arrangement according to the above-indicated form (7) does not require any electric energy for generating the magnetic vector potential. Therefore, the magnetic field can be easily produced at minimum running costs for magnetization of the metal.

(8) The method according to the above-indicated form (1), wherein the magnetic field is produced by the magnetic vector potential generated by application of an electric current to at least one coil.

According to the above-indicated form (8), the magnitude of the magnetic field can be easily varied depending upon an amount of the electric current to be applied to the coil.

(9) A magnetizing apparatus which produces a magnetic field for magnetizing metal in the magnetic field, the magnetizing apparatus comprising: a magnetic-field producing device which generates magnetic vector potential and which produces the magnetic field by the magnetic vector potential; and at least one magnetic-vector-potential inductor which is located adjacent to metal to be magnetized in the magnetic field produced by the magnetic-field producing device, for thereby inducing the magnetic vector potential to the metal and which has relative permeability whose absolute value is larger than an absolute value of relative permeability of the metal.

By using the magnetizing apparatus constructed according to the above-indicated form (9), the characteristic method of magnetizing metal described above can be advantageously and surely practiced, so that lots of metal which is hitherto deemed difficult or impossible to be magnetized can be easily and efficiently magnetized.

(10) A method of separating metal from a mixture of the metal and nonmetal, comprising the steps of: positioning a mixture of metal and nonmetal in a magnetic field produced by magnetic vector potential; magnetizing the metal in the mixture by positioning, in the magnetic field, at least one magnetic-vector-potential inductor which induces the magnetic vector potential that produces the magnetic field, such that the at least one magnetic-vector-potential inductor is located adjacent to the mixture, the at least one magnetic-vector-potential inductor having relative permeability whose absolute value is larger than an absolute value of relative permeability of the metal in the mixture; and separating the metal from the nonmetal by applying magnetic force to the metal which has been magnetized in the step of magnetizing the metal, so that the metal is separated from the mixture.

In the method of separating metal according to the above-indicated form (10), not only metal which is easily magnetized but also metal which is conventionally deemed difficult or impossible to be magnetized can be magnetized in the mixture of the metal and the nonmetal with high reliability and high efficiency. According to this arrangement, the metal which is conventionally deemed difficult or impossible to be magnetized can be separated from the mixture containing the metal and the nonmetal owing to action of the magnetic force with excellent working efficiency and high reliability.

(11) A method of separating metal from a solution containing the metal, comprising the steps of positioning a solution containing metal in a magnetic field produced by magnetic vector potential; magnetizing the metal in the solution by positioning, in the magnetic field, at least one magnetic-vector-potential inductor which induces the magnetic vector potential that produces the magnetic field, such that the at least one magnetic-vector-potential inductor is located adjacent to the solution, the at least one magnetic-vector-potential inductor having relative permeability whose absolute value is larger than an absolute value of relative permeability of the metal in the solution; causing concentration gradient of the metal in the solution containing the metal which has been magnetized in the step of magnetizing the metal, by applying the magnetic vector potential to the solution; and separating the solution in which the concentration gradient of the metal has been caused in the step of causing concentration gradient, into a high-metal-concentration solution part and a low-metal-concentration solution part, so that the metal is separated from the solution.

In the method of separating metal according to the above-indicated form (11), not only metal which is easily magnetized but also metal which is conventionally deemed difficult or impossible to be magnetized can be magnetized in the solution containing the metal with high reliability and high efficiency. According to this arrangement, it is possible to cause concentration gradient of the metal in the solution containing the metal which is conventionally deemed difficult or impossible to be magnetized, utilizing the magnetic vector potential. Further, the solution is separated, based on the concentration gradient, into the high-metal-concentration solution part which includes the metal in high concentration and the low-metal-concentration solution part which includes the metal in low concentration. Accordingly, the metal which is so far deemed difficult or impossible to be magnetized can be easily and efficiently separated from the solution containing such metal. The method of separating metal according to the above-indicated form (11) is suitably employed in separating metal ions from a solution containing the metal ions, separating metal colloids from a pseudo solution containing the metal colloids, and the like.

(12) A method of separating metal covered with a nonmetallic material from the nonmetallic material, comprising the steps of positioning metal covered with a nonmetallic material in a magnetic field produced by magnetic vector potential; magnetizing the metal by positioning, in the magnetic field, at least one magnetic-vector-potential inductor which induces the magnetic vector potential that produces the electric field, such that the at least one magnetic-vector-potential inductor is located adjacent to the metal, the at least one magnetic-vector-potential inductor having relative permeability whose absolute value is larger than an absolute value of relative permeability of the metal; releasing the metal from the nonmetallic material by breaking the nonmetallic material as a result of increase in a volume of the metal owing to Barret effect caused by magnetization of the metal; and separating the metal from the nonmetallic material by applying magnetic force to the metal which has been magnetized in the step of magnetizing the metal and which has been released from the nonmetallic material.

In the method of separating metal according to the above-indicated form (12), not only metal which is easily magnetized but also metal which is conventionally deemed difficult or impossible to be magnetized can be magnetized with ease and high efficiency in a state in which the metal is covered with the nonmetallic material. Further, the nonmetallic material covering the metal can be broken with high reliability by the increase in the volume of the metal owing to the Barret effect caused by magnetization. In this arrangement, therefore, even if the metal covered with the nonmetallic material is one that is conventionally deemed difficult or impossible to be magnetized, the metal can be separated from the nonmetallic material with high working efficiency and high reliability.

(13) The method according to the above-indicated form (12), wherein the step of magnetizing the metal and the step of releasing the metal from the nonmetallic material are conducted at the same time.

The above-indicated forms (2)-(8) described with respect to the form (1) may be applied to each of the above-indicated forms (9)-(12).

### BRIEF DESCRIPTION OF THE DRAWINGS

The above and other objects, features, advantages and technical and industrial significance of the present invention will be better understood by reading the following detailed description of presently preferred embodiments of the invention, when considered in connection with the accompanying drawings, in which:
Fig. 1 is a view showing a state in which an object to be magnetized is under magnetization using a magnetizing apparatus, according to the present method;
Fig. 2 is a view corresponding to Fig. 1 and showing a state in which an object to be magnetized is under magnetization using a modified magnetizing apparatus, according to the present method;
Fig. 3 is a view showing a state in which metal contained in a mixture of the metal and nonmetal is under magnetization, according to the present method;
Fig. 4 is a view schematically showing a state in which metal contained in a solution is magnetized and separated from the solution, according to the present method;
Fig. 5 is a view showing a state in which metal covered with a nonmetallic material is magnetized, according to the present method;
Fig. 6 is a view schematically showing magnetic vector potential and magnetic flux generated by a permanent magnet;
Fig. 7 is a microphotograph obtained as a result of observation and measurement of a surface of a specimen 1 produced in Experiment 1, using a magnetic force microscope;
Fig. 8 is a microphotograph obtained as a result of observation and measurement of a surface of a comparative specimen 2 used in Experiment 1, using the magnetic force microscope;
Fig. 9 is a microphotograph obtained as a result of observation and measurement of a surface of a specimen 2 produced in Experiment 2, using a magnetic force microscope; and
Fig. 10 is a microphotograph obtained as a result of observation and measurement of a surface of a comparative specimen 4 used in Experiment 2, using the magnetic force microscope.

### DETAILED DESCRIPTION OF THE INVENTION

Specific examples of metal as an object to be magnetized according to the present magnetizing method include: Ti, Zr, Hf belonging to Group IVb (Group 4); V, Nb, Ta belonging to Group Vb (Group 5); Cr, Mo, W belonging to Group VIb (Group 6); Mn, Tc, Re belonging to Group VIIb (Group 7); Fe, Ru, Os, Co, Rh, Ir, Ni, Pd, Pt belonging to Group VIII (Groups 8, 9 and 10); Cu, Ag, Au belonging to Group Ib (Group 11); and Zn, Cd, Hg belonging to Group IIb (Group 12). The specific examples of metal indicated above include metal that is conventionally deemed easy to be magnetized and metal that is conventionally deemed difficult or impossible to be magnetized. The metal to be magnetized according to the present method may be in various forms such as a simple substance form constituted by a single element, an alloy form, an intermetallic compound form, an ion form, and a colloid form.

Examples of the alloy containing the above-indicated various kinds of metal as an object to be magnetized include stainless steel, Duplex stainless steel, cobalt • chromium alloy, nickel • copper alloy, iron • nickel alloy, palladium • cobalt alloy, platinum • nickel alloy, platinum • iridium alloy, platinum • iron alloy, gold • silver • palladium alloy, and platinum-gold alloy. The alloys and the various kinds of metal simple substances may be used in the form of material from which a suitably shaped body or suitably structured body is to be obtained, or in the form of the suitably shaped body or suitably structured body. Further, each of the alloys and metal simple substances may be used as the object to be magnetized after having been subjected to various working operations such as plastic working or heat treatments such as thermal demagnetization. Further, as the ions and colloids of various kinds of metal indicated above, there are used, as the objects to be magnetized, those contained in various kinds of solutions or pseudo solutions (which are collectively referred to as "solutions" in the specification). It is noted that solvents or pseudo solvents of the solutions are not particularly limited.

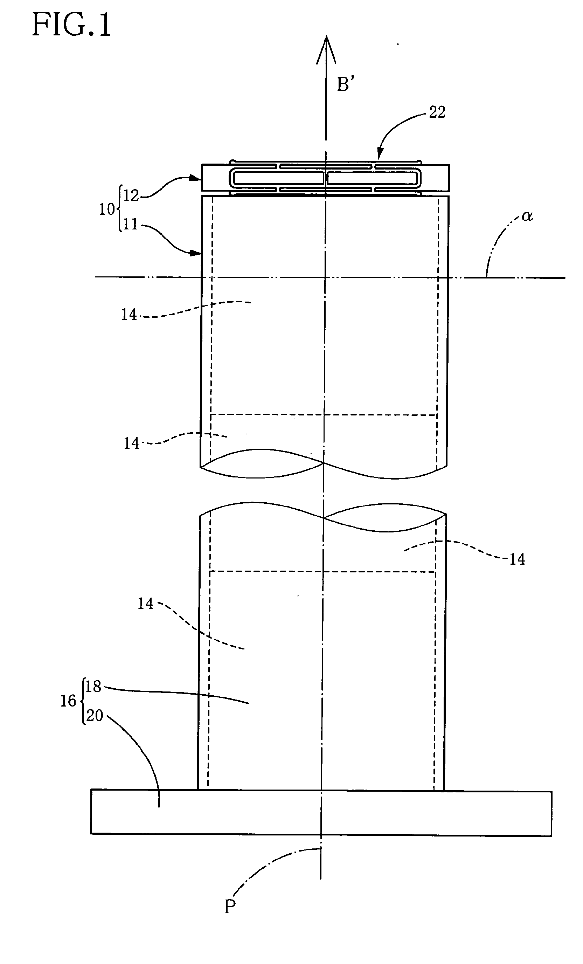

The object which is to be magnetized and which is formed of the various kinds of metal indicated above is advantageously magnetized using a magnetizing apparatus 10 shown in Fig. 1, for instance. Hereinafter, there will be explained a first embodiment relating to a magnetizing method and a magnetizing apparatus, wherein a cylindrical stent formed of stainless steel is used as one example of the object which is to be magnetized and which is formed of an alloy containing the metal indicated above.

As shown in Fig. 1, the magnetizing apparatus 10 used in the present embodiment is constituted by including a magnetic-field producing device 11 as a magnetic-field producing means and a magnetic-vector-potential inductor 12.

Described more specifically, the magnetic-field producing device 11 includes a plurality of permanent magnets 14 and a cover member 16 which is formed of a magnetic material. Each of the permanent magnets 14 of the magnetic-field producing device 11 has a cylindrical shape and has opposite end faces which function as the N-pole and the S-pole, respectively. The cover member 16 includes: a tubular portion 18 having a suitable height and an inside diameter for permitting the permanent magnets 14 to be inserted therein such that the permanent magnets 14 contact an inner circumferential surface of the tubular portion 18; and a base portion 20 disposed integrally with the tubular portion 18 so as to extend upright therefrom. The tubular portion 18 of the cover member 16 is constituted by an iron pipe which is the magnetic material and whose outer circumferential surface is coated with a thin film of stainless.

The permanent magnets 14 are coaxially disposed in series, such that the N-pole of one of any adjacent two permanent magnets 14 is attracted to the S-pole of the other of the adjacent two permanent magnets 14. Thus, the plurality of the permanent magnets 14 constitute, as a whole, a single elongate bar magnet whose upper end face and lower end face respectively function as one and the other of the N-pole and the S-pole. All of the permanent magnets 14 which take the form of such a single elongate bar magnet are inserted into the tubular portion 18 of the cover member 16, whereby the magnetic-field producing device 11 is constituted.

While not specifically shown in Fig. 1, there are used, as the permanent magnets 14, twelve neodymium ·iron·boron magnets which generate a large magnitude of magnetic vector potential. The twelve strong permanent magnets 14 are inserted in the tubular portion 18 such that the permanent magnets 14 are coaxially connected to each other in series and attract the base portion 20. Thus, a magnetic circuit of the twelve permanent magnets 14 connected in series is formed as a closed circuit. In the thus constructed magnetic-field producing device 10, there is generated a large magnitude of magnetic vector potential in a plane perpendicular to a center axis P of the twelve permanent magnets 14, such that the magnetic vector potential rotates in a clockwise direction when the S-pole side is viewed from the N-pole side. Consequently, the magnetic-field producing device 11 is capable of forming or producing a magnetic field with considerably large magnetic flux density with ease.

In the meantime, the magnetic-vector-potential inductor 12 has an elongate cylindrical shape and an outside diameter that is slightly smaller than an inside diameter of a cylindrical object 22 to be magnetized in the form of a stent. (Hereinafter, the object 22 to be magnetized is simply referred to as "the object 22".) The magnetic-vector-potential inductor 12 has an axial length which is larger than that of the object 22 and which is substantially the same as a diameter of the end face of each permanent magnet 14 of the magnetic-field producing device 11.

The magnetic-vector-potential inductor 12 has functions of inducing the magnetic vector potential generated by the magnetic-field producing device 11 and permitting the generated magnetic vector potential to efficiently and intensely act on the object 22. Accordingly, for allowing the magnetic-vector-potential inductor 12 to sufficiently exhibit the functions, an absolute value of relative permeability of the magnetic-vector-potential inductor 12 should be larger than an absolute value of relative permeability of the object 22. In the present embodiment, therefore, the magnetic-vector-potential inductor 12 is made of a material having relative permeability whose absolute value is larger than that of the object 22 formed of stainless steel. For instance, the magnetic-vector-potential inductor 12 is made of permalloy steel.

In magnetizing the object 22 using the magnetizing apparatus 10 including the magnetic-vector-potential inductor 12 and the magnetic-field producing device 11 constructed as described above, the magnetic-vector-potential inductor 12 is initially inserted into an inner hole of the object 22, such that an axially middle portion of the magnetic-vector-potential inductor 12 is enclosed with the object 22 as shown in Fig. 1, whereby the magnetic-vector-potential inductor 12 is located adjacent to the object 22 so as to be in contact therewith. Thus, the magnetic-vector-potential inductor 12 and the object 22 are attached to each other to provide an assembled body.

Then, the assembled body of the magnetic-vector-potential inductor 12 and the object 22 is laid on the upper end face of the uppermost one of the permanent magnets 14 of the magnetic-producing device 11, so as to extend in a direction perpendicular to the center axis P of the magnetic-field producing device 11. Namely, at least a portion of the magnetic-vector-potential inductor 12 and at least a portion of the object 22 are superposed on each other in a direction perpendicular to a plane (Fig. 6) formed by the magnetic vector potential generated by the permanent magnets 14 of the magnetic-field producing device 11, i.e., a plane α indicated by two-dot chain line in Fig. 1, in other words, in a direction parallel to a direction of magnetic flux of each permanent magnet 14 (i.e., in a direction indicated by an arrow B' in Fig. 1). In this state, the magnetic-vector-potential inductor 12 and the object 22 are disposed in a magnetic field that is produced by the magnetic vector potential generated by the permanent magnets 14.

In this instance, the magnetic vector potential is efficiently induced by the magnetic-vector-potential inductor 12 and thereby acts on the object 223 more intensely, because the absolute value of the relative permeability of the magnetic-vector-potential inductor 12 is larger than that of the object 22. Further, the magnetic-vector-potential inductor 12 is located adjacent to the object 22 so as to be in contact therewith, such that at least a portion of the magnetic-vector-potential inductor 12 is superposed on the object 22 in the direction perpendicular to the plane α formed by the magnetic vector potential. Therefore, the present arrangement is effective to reduce a cancellation amount by which the magnetic vector potential which acts on portions of the object 22 under rotation is cancelled due to collision thereamong. As a result, the magnetic vector potential effectively acts on the object 22 in the magnetic field produced by the magnetic-field producing device 11, so that the object 22 can be magnetized.

There is no particular limitation to an upper limit of the absolute value of the relative permeability of the magnetic-vector-potential inductor 12 which is made larger than that of the object 22. At the present time, however, there exist substantially no materials in which the absolute value of the relative permeability exceed 1000000 times the absolute value of the relative permeability of the object 22 formed of various kinds of metal indicated above. Even if the magnetic-vector-potential inductor 12 formed of such materials is used, the cost of producing the magnetic-vector-potential inductor 12 is considerably increased. Accordingly, it is preferable in a realistic sense that the absolute value of the relative permeability of the magnetic-vector-potential inductor 12 be not larger than 1000000 times that of the object 22. In this respect, for sufficiently obtaining strong action of the magnetic vector potential on the object 22 in magnetizing the object 22, it is more preferable that the absolute value of the relative permeability of the magnetic-vector-potential inductor 12 be in a range from not smaller than 10 times the absolute value of the relative permeability of the object 22 to not larger than 1000000 times that of the object 22.

Examples of the material whose absolute value of the relative permeability satisfies the above-indicated conditions and which can be used as the magnetic-vector-potential inductor 12 include, in addition to the above-indicated permalloy steel, supermalloy, iron containing about 0.2 % of impurities, pure iron containing about not greater than 0.05 % of impurities, ferro silicon, permendur, amorphous, sendust, and MnZn ferrite.

As mentioned above, in the present embodiment, the magnetic-vector-potential inductor 12 is inserted into the object 22 so as to provide the assembled body, and the thus obtained assembled body is simply disposed parallel to the plane α formed by the magnetic vector potential in the magnetic field produced by the magnetic-field producing device 11. This arrangement permits easy and efficient magnetization of the object 22 formed of not only the metal that can be conventionally magnetized with ease but also the metal that is conventionally deemed difficult or impossible to be magnetized. Therefore, the metal that is so far deemed difficult or impossible to be magnetized can be effectively used for various sorts of machines, electronic equipment, communication apparatus, medical equipment or instruments, and the like.

In the present arrangement, at least a portion of the magnetic-vector-potential inductor 12 is superposed, in the magnetic field, on the object 22 in the direction perpendicular to the plane α formed by the magnetic vector potential, whereby the magnetic-vector-potential inductor 12 is located adjacent to the object 22 so as to be in contact therewith. Accordingly, the magnetic vector potential acts on the object 22 more intensely and more sufficiently, so that the object 22 can be magnetized with high reliability and high efficiency.

In the present embodiment, the magnetic vector potential is generated by the magnetic-field producing device 11 constituted using the plurality of permanent magnets 14, thereby producing the magnetic field. Accordingly, unlike a magnetic-field producing device constituted using an electromagnet(s) or the like, the magnetic-field producing device 11 of the present embodiment does not require any electric energy or the like for magnetizing the object 22. Therefore, it is possible to advantageously avoid or inhibit increase in the running costs even where a large number of objects 22 are successively magnetized.

In magnetization of the object 22, the reduction in the cancellation amount among the magnetic vector potential acting on portions of the object 22 is attained by the specific disposition form in which the magnetic-vector-potential inductor 12 and the object 22 are disposed in the magnetic field such that the magnetic-vector-potential inductor 12 is located adjacent to the object 22.

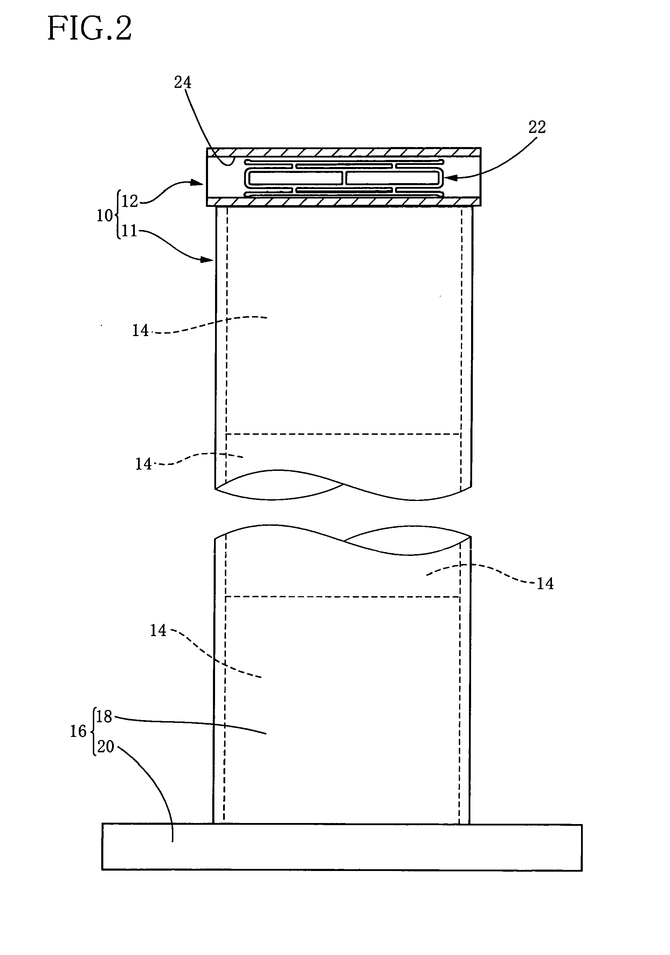

The specific disposition form of the magnetic-vector-potential inductor 12 and the object 12 may be realized such that the magnetic-vector-potential inductor 12 is enclosed with the object 12. The specific disposition form may be realized otherwise as explained below referring to Fig. 2, for instance. As shown in Fig. 2, the magnetic-vector-potential inductor 12 is constituted by a tubular member having an inner hole 24 whose diameter is larger than an outside diameter of the object 22 by a suitable amount. The object 22 is inserted into the inner hole 24 of the magnetic-vector-potential inductor 12. In other words, the magnetic-vector-potential inductor 12 encloses the object 22, thereby realizing the specofic disposition form. This arrangement also permits easy and efficient magnetization of the object 22 formed of the metal which is so far deemed difficult or impossible to be magnetized.

Where the magnetic-vector-potential inductor 12 is enclosed with the object 22 as shown in Fig. 1, the magnetic-vector-potential inductor 12 may have any shape other than the illustrated cylindrical shape. Further, the number of the magnetic-vector-potential inductor 12 to be used is not particularly limited. Where the magnetic-vector-potential inductor 12 encloses the object 22 as shown in Fig. 2, the magnetic-vector-potential inductor 12 may be in the form of a box, a casing or the like, other than the illustrated tubular member.

In the speific disposition form of the magnetic-vector-potential inductor 12 and the object 22, it is not always necessary to dispose the magnetic-vector-potential inductor 12 and the object 22 so as to be in contact with each other. The magnetic-vector-potential inductor 12 and the object 22 may be disposed so as to be out of contact with each other with a suitable clearance formed therebetween.

The magnetic-vector-potential inductor 12 may be constituted by a plate member, a block-like member, or the like, and such a magnetic-vector-potential inductor 12 may be located adjacent to the object 22 such that the inductor 12 is stacked or superposed on the object 22 so as to be in contact or out of contact with the object 22. In this instance, a plurality of the plate-like magnetic-vector-potential inductors 12 may sandwich the object 22 therebetween or a plurality of the objects 22 may sandwich the magnetic-vector-potential inductor 12 therebetween so as to be in contact or out contact with the magnetic-vector-potential inductor 12. Thus, the magnetic-vector-potential inductor(s) 12 may be located adjacent to the object(s) 22. In these disposition forms, where the direction in which the magnetic-vector-potential inductor 12 and the object 22 are superposed on or opposed to each other is made perpendicular to the plane α formed by the magnetic vector potential, the objects 22 can be magnetized with high reliability and high efficiency.

It is needless to mention that the magnetic-vector-potential inductor 12 and the object 22 may have any size and configuration irrespective of the disposition forms indicated above.

The structure of the magnetic-field producing device 11 may not be limited to the illustrated one using the plurality of permanent magnets 14. Any other structure may be employed, provided that the magnetic-field producing device generates the magnetic vector potential and produces the magnetic field by the generated magnetic vector potential. Accordingly, in place of the illustrated magnetic-field producing device 11, there may be used a magnetic-field producing device that is configured to generate the magnetic vector potential by application of an electric current to a coil for thereby producing the magnetic field. Where the thus configured magnetic-producing device is used, it is possible to vary the degree of the magnetic vector potential and accordingly the intensity of the magnetic field, by adjusting an amount of application of the electric current to the coil. As a result, it is possible to efficiently set the magnitude of the magnetic force of the magnetized metal, to a desired level.

In the illustrated embodiment, while the object 22 is formed of the alloy containing the metal indicated above, the object 22 may be formed of the simple substance of the metal indicated above or the intermetallic compound containing the metal indicated above.

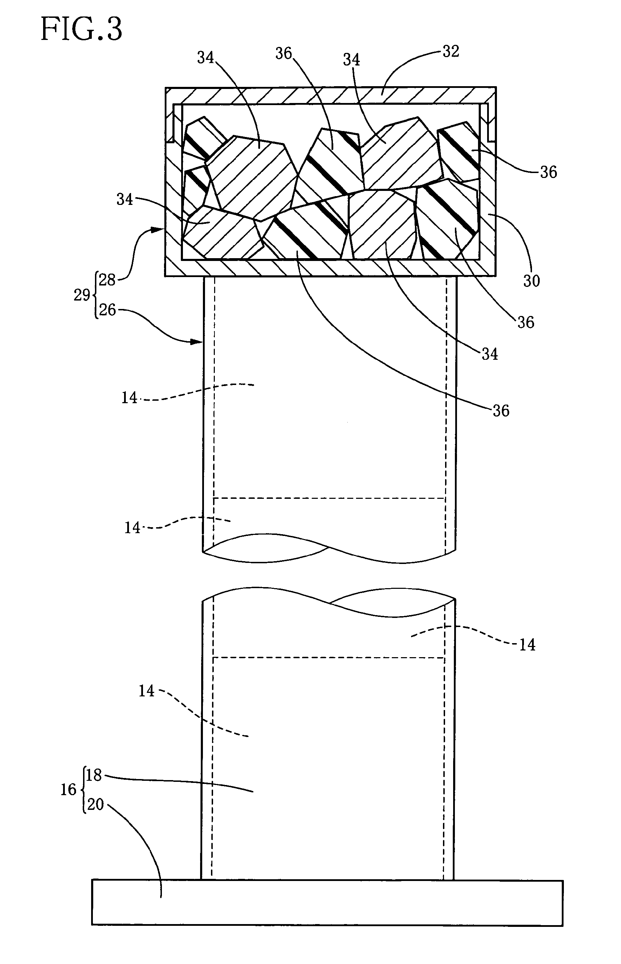

Referring next to Fig. 3, there will be explained a second embodiment which relates to a method of separating a metal simple substance from a mixture of the metal simple substance and nonmetal simple substance by utilizing the metal magnetizing method described above.

As shown in Fig. 3, a separating system employed in this embodiment includes a magnetizing apparatus 29 having a magnetic-field producing device 26 and a magnetic-vector-potential inductor 28. The separating system further includes a known magnetic separator not shown. The magnetic-field producing device 26 of the magnetizing apparatus 29 in this second embodiment is identical in construction with the magnetic-field producing device 11 in the aforementioned first embodiment. The reference numerals as used in the first embodiment with respect to the magnetic-field producing device 11 are used to identify the corresponding portions and components of the magnetic-field producing device 26, and a detailed description of which is dispensed with.

The magnetic-vector-potential inductor 28 includes a casing body 30 and a lid 32. The casing body 30 is a rectangular box-like member opening upwards and has a size large enough to accommodate a mixture of metal pieces 34 as the simple substance of various kinds of metal indicated above and non-metallic pieces 36 as the simple substance of nonmetal such as synthetic resin.

The lid 32 has a size large enough to cover the opening of the casing body 30 and is arranged to be fitted on the casing body 30 for covering its opening. The casing body 30 and the lid 32 that constitute the magnetic-vector-potential inductor 28 are formed of the above-indicated material (e.g. permalloy steel) in which the absolute value of the relative permeability is larger than that of the metal pieces 34.

In separating the metal pieces 34 from the mixture of the metal pieces 34 and the nonmetal pieces 36 using the thus constructed separating system, the opening of the casing body 30 is initially covered with the lid 32 with the mixture accommodated in the casing body 30 of the magnetic-vector-potential inductor 28. Thus, the magnetic-vector-potential inductor 28 is located adjacent to the mixture of the metal pieces 34 and the nonmetal pieces 36 so as to be in partial contact therewith.

Thereafter, the magnetic-vector-potential inductor 28 accommodating the mixture is placed on the upper end face of the uppermost one of the permanent magnets 14 of the magnetic-field producing device 26. Thus, in the magnetic field which is produced by the magnetic vector potential generated by the permanent magnets 14 of the magnetic-field producing device 26, the mixture of the metal pieces 34 and the nonmetal pieces 36 is superposed on or opposed to the magnetic-vector-potential inductor 28 in the direction perpendicular to the plane α (Figs. 1 and 6) formed by the magnetic vector potential, whereby the mixture is located adjacent to the magnetic-vector-potential inductor 28 so as to be in contact or out of contact therewith. In this arrangement, the metal pieces 34 can be easily and efficiently magnetized even where the metal pieces 34 are made of the metal which is conventionally deemed difficult or impossible to be magnetized.

Subsequently, the mixture of the metal pieces 34 which have been magnetized and the nonmetal pieces 36 is taken out of the casing body 30 of the magnetic-vector-potential inductor 28 and then put into the magnetic separator not shown, whereby the magnetized metal pieces 34 are attracted by the magnetic force. Thus, the metal pieces 34 are separated from the mixture containing the nonmetal pieces 36.

According to the second embodiment described above, even where the metal pieces 34 are formed of the metal which is so far deemed difficult or impossible to be magnetized, the metal pieces 34 can be easily and efficiently separated from the mixture simply by magnetizing the metal pieces 34 with the mixture accommodated in the casing body 30 of the magnetic-vector-potential inductor 28 and then putting the mixture into the magnetic separator.

In the magnetic-vector-potential inductor 28 used in separating the metal pieces 34 from the mixture of the metal pieces 34 and the nonmetal pieces 36, the absolute value of the relative permeability thereof is larger than that of the metal pieces 34. Further, the magnetic-vector-potential inductor 28 is located, in the magnetic field, adjacent to the mixture of the metal pieces 34 and the nonmetal pieces 36 so as to be in contact or out of contact with the mixture.

Therefore, the magnetic-vector-potential inductor 28 formed of the illustrated material may be constituted by a tubular member having an inner hole in which the mixture is accommodated. The magnetic-vector-potential 28 may be formed of a plate member, a bar member, a block-like member or the like and may be put into the mixture. Such a magnetic-vector-potential 28 may be disposed over, below, or beside the mixture. Further, a plurality of such magnetic-vector-potential inductors 28 may be positioned with the mixture interposed therebetween.

In the illustrated second embodiment, while the metal pieces 34 to be separated from the mixture are formed of the simple substance of the above-indicated various kinds of metal, the metal pieces 34 may be formed of the alloy or the intermetallic compound containing the metal indicated above.

Further, in place of the permanent magnets 14, a coil or the like may be used, for instance, for producing the magnetic field by generating the magnetic vector potential.

The operation of separating the magnetized metal pieces 34 from the mixture may be automatically carried out using a device other than the magnetic separator or manually carried out using permanent magnets, electromagnets or the like by which the metal pieces 34 are attracted, as long as the metal pieces 34 can be separated by application of the magnet force to the mixture.

The operation of magnetizing the metal pieces 34 and the operation of separating the magnetized metal pieces 34 form the mixture may be performed by using a device which integrally has a structure capable of performing the operation of magnetizing the metal pieces 34 and a structure capable of performing the operation of separating the magnetized metal pieces 34 from the mixture by application of the magnetic force to the mixture.

The method of separating the metal pieces 34 from the mixture according to the illustrated second embodiment may be practiced in a form in which the magnetic-vector-potential inductor 28 is enclosed with the mixture.

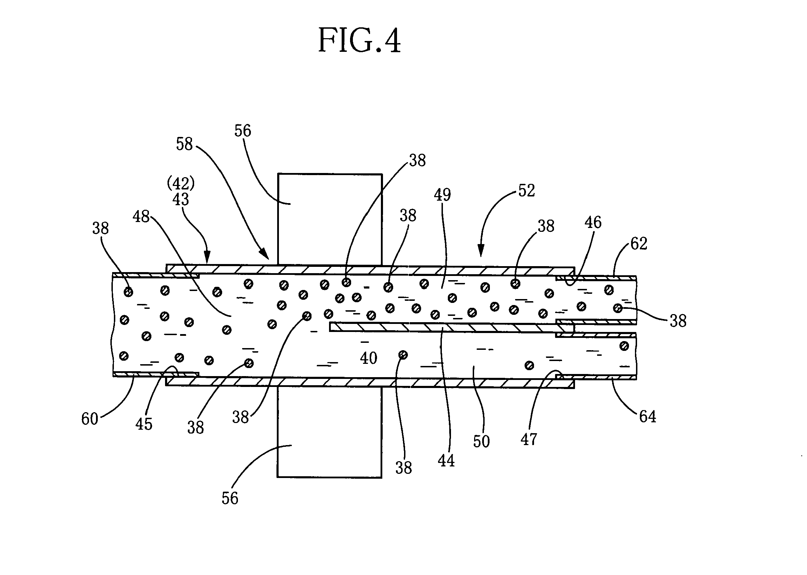

Referring next to Fig. 4, there will be explained a third embodiment which relates to a method of separating metal from a solution containing metal ions by utilizing the metal magnetizing method described above.

As shown in Fig. 4, a separating system employed in this third embodiment includes a flow-path defining member 42 which defines flow paths through which a solution 40 (e.g., an aqueous solution) containing metal ions 38 to be separated flows in one direction, here, a direction from the left to the right in Fig. 4. The flow-path defining member 42 as a whole is constituted by a tubular member which has a prescribed length and through which the solution 40 flows in its lengthwise direction. The solution 40 is permitted to be easily flowed in the flow-path defining member 42 by positioning the flow-path defining member 42 so as to be inclined downward at one of lengthwise opposite ends or by activating a pump not shown.

In the flow-path defining member 42, there is disposed a partition plate 44 which fluid-tightly divides an inside space of the flow-path defining member 44 into upper and lower parts. The partition plate 44 is disposed so as to extend from a middle portion of the flow-path defining member 42 as seen in the direction of the flow of the solution 40 toward a downstream side in the flow direction, whereby an end opening of the flow-path defining member 42 on the downstream side is divided into two, i.e., upper and lower openings.

At an upstream end of the flow-path defining member 42 as seen in the flow direction of the solution 40, there is formed an inlet 45 which is given by an end opening of the flow-path defining member 42 on the upstream side and through which the solution 40 is introduced. At a downstream end of the flow-path defining member 42 as seen in the flow direction of the solution 40, there are formed an upper outlet 46 and a lower outlet 47 on upper and lower sides of the partition plate 44, respectively. In the inside space of the flow-path defining member 42, a portion from the inlet 45 to an upstream end of the partition plate 44 functions as a first flow path 48. A portion of the inside space between the partition plate 44 and an upper half-cylindrical wall portion of the flow-path defining member 42 functions as a second flow path 49 while a portion of the inside space between the partition plate 44 and a lower half-cylindrical wall portion of the flow-path defining member 42 functions as a third flow path 50. The solution 40 which is introduced into the flow-path-defining member 42 via the inlet 45 is first flowed through the first flow path 48, then branched by the partition plate 44 so as to be flowed through the second and third flow paths 49, 50, and consequently discharged outside the flow-path defining member 42 via the upper and lower outlets 46, 47. Namely, a section of the flow-path defining member 42 at which the partition plate 44 is disposed constitutes a separating section 52 as a separating means.

The flow-path defining member 42 is formed of the above-indicated material (e.g., permalloy steel) which can induce the magnetic vector potential and in which the absolute value of the relative permeability is larger than that of the various kinds of metal indicated above. Namely, the entirety of the flow-path defining member 42 is constituted as a magnetic-vector-potential inductor 43. Further, at a boundary portion between the first flow path 48 and the second and third flow paths 49, 50 of the magnetic-vector-potential inductor 43 (the flow-path defining member 42), two cylindrical permanent magnets 56 are disposed in contact with an outer surface of the upper half-cylindrical wall portion and an outer surface of the lower half-cylindrical wall portion, respectively. In each of the permanent magnets 56, an upper end face functions as the S-pole and a lower end face functions as the N-pole.

In the thus structured separating system, the magnetic field is produced at the boundary portion between the first flow path 48 and the second and third flow paths 49, 50, by the magnetic vector potential generated by the permanent magnets 56. Accordingly, the two permanent magnets 56 and a section of the magnetic-vector-potential inductor 43 where the two permanent magnets 56 are disposed cooperate with each other to constitute a magnetizing section 58.

In separating the metal ions 38 from the solution 40 using the thus structured separating system, an introduction pipe 60 for introducing the solution 40 is connected to the inlet 45 of the magnetic-vector-potential inductor 43 while an upper discharge pipe 62 and a lower discharge pipe 64 are connected to the upper outlet 46 and the lower outlet 47, respectively.

Then, the solution 40 containing the metal ions 38 is introduced into the magnetic-vector-potential inductor 43 from the introduction pipe 60 via the inlet 45, and flowed toward the upper and lower outlets 46, 47.

When the solution 40 is flowed in the first flow path 48 at the magnetizing section 58 of the magnetic-vector-potential inductor 43, the solution 40 contacts the magnetic-vector-potential inductor 43, whereby the metal ions 38 in the solution 40 are located adjacent to the magnetic-vector-potential inductor 43 so as to in contact therewith, in the magnetic field produced by the magnetic vector potential generated by the two permanent magnets 56. According to this arrangement, the metal ions 38 can be easily and efficiently magnetized even where the metal ions 38 are ions of the metal which is conventionally deemed difficult or impossible to be magnetized. The magnetized metal ions 38 are collected by the magnetic vector potential generated by the permanent magnets 56 mainly on the S-pole side, that is, on the upper half-cylindrical wall portion side of the magnetic-vector-potential inductor 43 at its magnetizing section 58. As a consequence, there is caused, in the solution 40 flowing in the first flow path 48, concentration gradient of the metal ions 38 such that the concentration of the metal ions 38 is high in a part of the solution 40 located on the upper half-cylindrical wall portion side of the magnetic-vector-potential inductor 43 while the concentration of the metal ions 38 is low in a part of the solution 40 located on the lower half-cylindrical wall portion side of the same 43.

Thereafter, the solution 40 in which the concentration gradient described above has been caused is flowed further through the magnetic-vector-potential inductor 43. When the solution 40 reaches the separating section 52 where the inside space of the flow-path defining member 43 is divided into the upper and lower portions by the partition plate 44, the part of the solution 40 containing the metal ions 38 at a high concentration (the high-metal-concentration solution part) is flowed in the second flow path 49 over the partition plate 44 while the part of the solution 40 containing the metal ions 38 at a low concentration (the low-metal-concentration solution part) is flowed in the third path 50 below the partition plate 44.

The solution containing the metal ions 38 at the high concentration which has been flowed in the second flow path 49 is discharged into the upper discharge pipe 62 via the upper outlet 46 while the solution containing the metal ions 38 at the low concentration which has been flowed in the third flow path 50 is discharged into the lower discharge pipe 64 via the lower outlet 46. Thus, the metal ions 38 are collected at higher concentrations and separated from the solution 40 in amounts as large as possible. It is to be understood that the metal ions 38 are schematically shown in Fig. 4 for easier understanding of the method of separating the metal ions 38.

In the third exemplary embodiment explained above, therefore, the metal ions 38 in the solution 40 can be easily and efficiently separated from the solution 40 in amounts as large as possible, by simply introducing the solution 40 containing the metal ions 38 into the first flow path 48 of the magnetic-vector-potential inductor 43, even where the metal ions 38 are ions of the metal which is hitherto deemed difficult or impossible to be magnetized.

The magnetic-vector-potential inductor 43 used in separating the metal ions 38 from the solution 40 is formed of the material in which the absolute value of the relative permeability is larger than that of the metal ions 38. Further, the magnetic-vector-potential inductor 43 is located, in the magnetic field, adjacent to the solution 40 containing the metal ions 38 so as to be in contact or out of contact with the solution 40. Accordingly, an entirety of a groove-like member such as a U-shaped groove may be constituted as the magnetic-vector-potential inductor. Alternatively, a plate or the like formed of the material mentioned above may be bonded to an inner surface of a tubular or pipe member or an inner surface of a groove, whereby the magnetic-vector-potential inductor may be constituted by the inner surface.

In the illustrated third embodiment, the method of separating the metal ions 38 from the solution 40 containing the metal ions 38 is explained. It is possible to separate metal colloids from a solution (a pseudo solution) containing the metal colloids by an operation similar to that explained above with respect to the method of separating the metal ions 38.

Instead of the permanent magnets 56, a coil or the like may be used for generating the magnetic vector potential and thereby producing the magnet field.

The operation of magnetizing the metal ions 38 in the solution 40 and causing the concentration gradient of the metal ions 38 in the solution 40 and the operation of separating the metal ions 38 from the solution 40 based on the concentration gradient may be carried out in different steps using distinct devices.

The method of separating the metal ions 38 from the solution 40 according to the illustrated third embodiment may be practiced in a form in which the magnetic-vector-potential inductor 43 is enclosed with the solution 40 containing the metal ions 38.

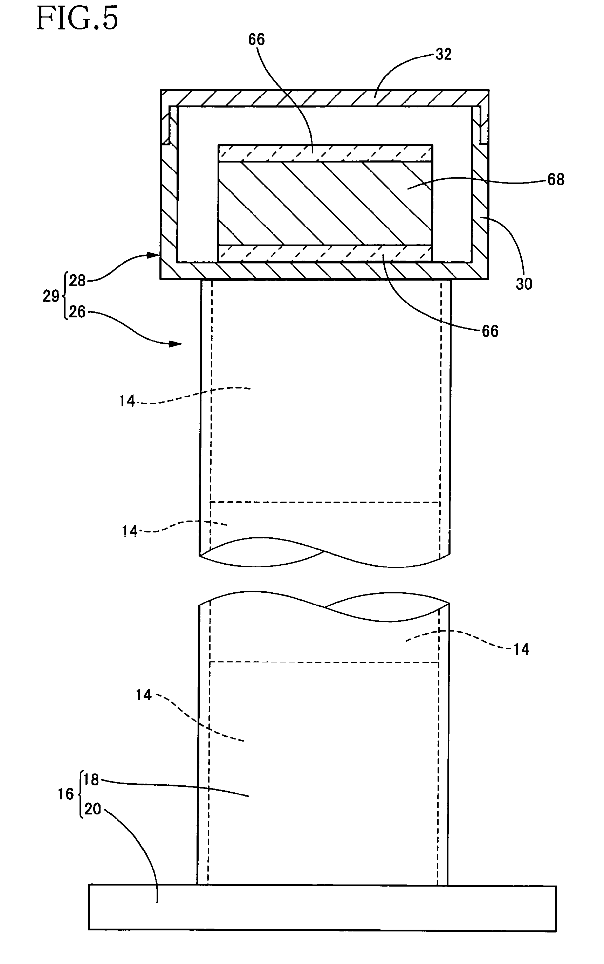

Referring next to Fig. 5, there will be explained a fourth embodiment which relates to a method of separating a metal simple substance covered with a nonmetallic material from the nonmetallic material by utilizing the metal magnetizing method described above.

As shown in Fig. 5, a separating system employed in the fourth embodiment is the same as that employed in the illustrated second embodiment which relates to the method of separating the metal simple substance from the mixture of the metal simple substance and the nonmetal simple substance. More specifically explained, the separating system includes the magnetizing apparatus 29 having the magnetic-field producing device 26 and the magnetic-vector-potential inductor 28. Here, there is accommodated, in the casing body 30 of the magnetic-vector-potential inductor 28, a metal component 68 which is formed of a simple substance of the above-indicated various kinds of metal and which is covered with two nonmetallic covering members 66 such as ceramic packages fixed to the metal component 68 so as to sandwich the same 68 therebetween. The reference numerals as used with respect to the magnetizing apparatus 29 shown in Fig. 3 are used to identify the corresponding portions and components of the magnetizing apparatus 29 shown in Fig. 5, and a detailed explanation of which is dispensed with.

In separating the metal component 68 from the nonmetallic covering members 66 fixed thereto for covering the same 68, the opening of the casing body 30 of the magnetic-vector-potential inductor 28 is initially covered with the lid 32, with the metal component 68 that is covered with the nonmetallic covering members 66 accommodated in the casing body 30, whereby the magnetic-vector-potential inductor 28 is located adjacent to the metal component 68 so as to be in partial contact therewith via the nonmetallic covering members 66.

Subsequently, the magnetic-vector-potential inductor 28 accommodating the metal component 68 is placed on the upper end face of the uppermost one of the permanent magnets 14 of the magnetic-field-producing device 26. Thus, in the magnetic field produced by he magnetic vector potential generated by the permanent magnets 14 of the magnetic-field producing device 26, the metal component 68 covered with the nonmetallic covering members 66 is superposed on or opposed to the magnetic-vector-potential inductor 28 in the direction perpendicular to the plane α (Figs. 1 and 6) formed by the magnetic vector potential, whereby the metal component 68 is located adjacent to the magnetic-vector-potential inductor 28 so as to be in contact or out of contact therewith.

Accordingly, the metal component 68 can be easily and efficiently magnetized even where the metal component 68 is conventionally deemed difficult or impossible to be magnetized. In this respect, when the metal component 68 is magnetized, Barret effect or magnetovolume effect is caused, thereby increasing the volume of the metal component 68. Owing to such increase in the volume of the metal component 68, the nonmetallic covering members 66 are cracked, resulting in breaking or fracture thereof. Consequently, the metal component 68 is released from the nonmetallic covering members 66 covering the same 68.

Thereafter, the metal component 68 and the nonmetallic covering members 66 broken as described above are taken out of the casing body 30 of the magnetic-vector-potential inductor 28. Then, while not shown, a magnetic separation using a permanent magnet, for instance, is performed on the nonmetallic covering members 66 and the metal component 68 taken out of the casing body 30, whereby the metal component 68 is separated from the nonmetallic covering members 68.

As explained above, in the present embodiment, even where the metal component 68 covered with the nonmetallic covering members 66 fixed thereto is so far deemed difficult or impossible to be magnetized, the metal component 68 can be separated from the nonmetallic covering members 66 with ease and high efficiency by simply performing the magnetic separation after the metal component 68 covered with the nonmetallic covering members 66 has been magnetized while being accommodated in the casing body 30 of the magnetic-vector-potential inductor 28.

The magnetic-vector-potential-inductor 28 used in separating the metal component 68 from the nonmetallic covering members 66 covering the same 68 is arranged such that the absolute value of the relative permeability thereof is larger than that of the metal component 68 and such that the magnetic-vector-potential inductor 28 is located, in the magnetic field, adjacent to the metal component covered with the nonmetallic covering members 66 so as to be in contact or out of contact with the metal component 68.

Accordingly, the magnetic-vector-potential inductor 28 formed of the above-indicated material may be constituted by a tubular member having an inner hole into which the metal component 66 covered with the nonmetallic covering members 68 may be accommodated. The magnetic-vector-potential inductor 28 may be constituted by a plate member, bar member, a block-like member or the like. A plurality of the thus constituted magnetic-vector-potential inductors 28 may sandwich the metal component 68 covered with the nonmetallic covering members 66. Such a magnetic-vector-potential inductor 28 may be sandwiched by a plurality of metal components 68 each covered with the nonmetallic covering members 68. Further, such a magnetic-vector-potential inductor 28 may be superposed on the metal component 68 covered with the nonmetallic covering members 66. Thus, the magnetic-vector-potential inductor(s) 28 may be located adjacent to the metal component(s) 68 covered with the nonmetallic covering members 66 so as to be in contact or out of contact therewith.

In the illustrated fourth embodiment, while the metal component 68 covered with the nonmetallic covering members 66 is formed of the simple substance of the above-indicated various kinds of metal, the metal component 68 may be formed of the alloy or the intermetallic compound containing the above-indicated various kinds of metal.

In stead of the permanent magnets 14, a coil or the like may be used for generating the magnetic vector potential and producing the magnetic field.

An operation of magnetizing the metal component 68 covered with the nonmetallic covering members 66 and breaking the nonmetallic covering members 66 and an operation of separating the metal component 68 from the nonmetallic covering members 66 by application of magnetic force to the substance in which are mixed the magnetized metal component 68 and the broken nonmetallic covering members 66 may be conducted using by an apparatus integrally having a structure of conducting the magnetizing and breaking operation and a structure of conducting the separating operation.

In the illustrated fourth embodiment, while the magnetic-vector-potential-inductor 28 encloses the metal component 68 covered with the nonmetallic covering members 66, the magnetic-vector-potential inductor 28 may be enclosed with the metal component 68.

### Examples

To further clarify the present invention, some experiments relating to the embodiments of the invention will be described. It is to be understood that the present invention is not limited to the details of the illustrated experiments. It is to be further understood that the present invention is not limited to the embodiments illustrated above, but may be embodied with various changes and modifications, which may occur to those skilled in the art without departing from the scope of the invention defined in the attached claims.

### <Experiment 1>

There were initially prepared, as objects to be magnetized, three stents each having a tubular strut structure as a whole and made of austenitic SUS316L. Further, there was prepared, as the magnetic-vector-potential inductor, a round bar made of permalloy steel and having a size large enough to be insertable into an inner hole of each stent prepared as described above. The absolute value of the relative permeability of each stent was 1.0 while the absolute value of the relative permeability of the permalloy-steel bar was 100000. Accordingly, the absolute value of the relative permeability of the latter was 100000 times that of the former.

The permalloy-steel bar was inserted into the inner hole of one of the thus prepared three stents, and the stent and the permalloy-steel bar were brought into close contact with each other using a stent crimper. Then, the stent into which the permalloy-steel bar has been inserted was placed on the upper surface of the uppermost one of the permanent magnets of the magnetic-field producing device having a structure shown in Fig. 1, such that the stent and the permalloy-steel bar were disposed shown in Fig. 1. Thus, in the magnetic field produced by the magnetic vector potential, the permalloy-steel bar as the magnetic-vector-potential inductor in which the absolute value of the relative permeability is larger than that of the stent as the object to be magnetized was superposed on the stent in the direction perpendicular to the plane formed by the magnetic vector potential, so that the permalloy-steel bar was located adjacent to the stent so as to be in contact therewith. As the permanent magnets of the magnetic-field producing device to be used here, there were used four neodymium • iron • boron magnets each having a diameter of 14 mm and a length of 22 mm. The magnetic flux density of the magnetic field produced by the magnetic-field producing device was 1.5 T.

In this state, the stent and the permalloy-steel bar were left for 36 hours for magnetizing the stent. Thereafter, the pamalloy-steel bar was pulled out from the stent, whereby there was obtained a magnetized stent as a specimen 1.

For comparison, one of the two stents which are not subjected to the magnetizing operation described above was placed on the upper surface of the uppermost one of the permanent magnets of the magnetic-field producing device used in the magnetizing operation for obtaining the specimen 1, in a state in which the permalloy-steel bar was not inserted into the inner hole of the stent. The stent was left in this condition for 36 hours for magnetization, whereby there was obtained a magnetized stent as a comparative specimen 1. The last one of the stents which is not subjected to any magnetizing operation was used as a stent as a comparative specimen 2.

The magnetic flux density of each of the stent specimen 1 and the comparative stent speciment 2 was measured using a tesla meter ("magnetic flux densimeter: tesla meter TM-601" available from SATO SHOJI CORPORATION, Japan). The magnetic flux density of the stent specimen 1 was 0.1T while the magnetic flux density of the comparative stent specimens 1, 2 was 0.001T.

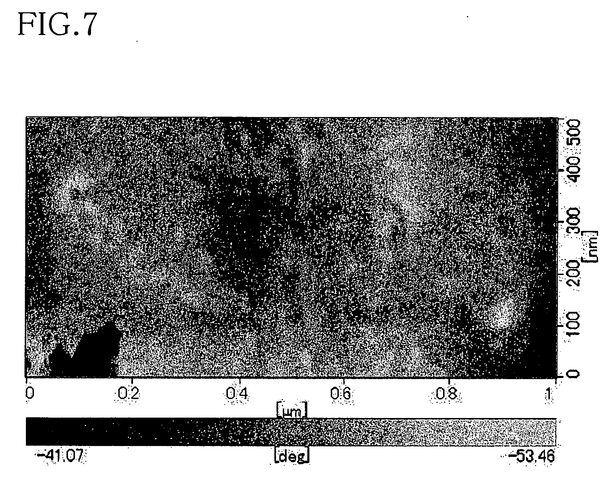

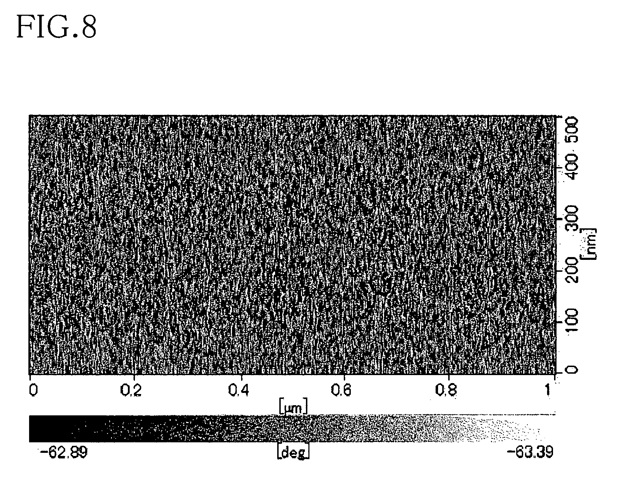

Subsequently, there were observed and measured of directions of respective magnetic domains in nano size in each of the stent specimen 1 and the comparative stent sepecimen 2 using MFM (Magnetic Force Microscope available form Seiko Instruments Inc., Japan). In the observation and measurement, rectangular regions (1 µm x 0.5 µm) in the respective stents were relatively compared under the same measuring conditions using a cantilever under the same spring constant of 40N/m. The measurement results of the stent specimen 1 and the comparative stent specimen 2 are shown in Fig. 7 and Fig. 8, respectively.

As shown in Fig. 7, in the stent specimen 1 which was subjected to the magnetizing operation according to the method of the present invention, the directions of the respective magnetic domains in nano size are identical with each other, and the N-pole (black portions in Fig. 7) and the S-pole (white portions in Fig. 7) are observed. It is thus recognized that the stent specimen 1 was magnetized with high reliability. In contrast, as shown in Fig. 8, in the comparative stent specimen 2 which was not subjected to the magnetizing operation according to the method of the present invention, the directions of the respective magnetic domains in nano size are irregular or random, and no magnetic poles are generated. It is thus recognized that the comparative stent specimen 2 was not magnetized at all.

From the measurement results of the magnetic flux density in the stent specimen 1 and the comparative stent specimens 1, 2 and the measurement results using the MFM, it can be recognized that the stent formed of the austenitic SUS316L that is one of the metal conventionally deemed impossible to be magnetized can be easily and reliably magnetized according to the method of the present invention.

### <Experiment 2>

There were initially prepared, as objects to be magnetized, three bars made of gold. Further, there was prepared, as the magnetic-vector-potential inductor, a cylindrical member made of permalloy steel and having an inner hole into which each gold bar prepared as described above is insertable. The absolute value of the relative permeability of each gold bar was 1.0 while the absolute value of the relative permeability of the permalloy-steel cylindrical member was 100000. Accordingly, the absolute value of the relative permeability of the latter was 100000 times that of the former.

One of the three gold bars prepared as described above was inserted into the inner hole of the parmalloy-steel cylindrical member and disposed in the magnetic field produced using a pulse magnetizing apparatus (available from DENSHIJIKI INDUSTRY CO., LTD, Japan), with the gold bar being laid. The pulse magnetizing apparatus is arranged to produce the magnetic field with the magnetic flux density of 2.5 T. In this way, in the magnetic field produced by the magnetic vector potential, the permalloy-steel cylindrical member as the magnetic-vector-potential inductor in which the absolute value of the relative permeability is larger than that of the gold bar as the object to be magnetized was superposed on the gold bar in the direction perpendicular to the plane formed by the magnetic vector potential, so that the permalloy-steel cylindrical member was located adjacent to the gold bar so as to be in contact therewith.

In this state, the magnetic field was produced by the pulse magnetizing apparatus three times, with a time period of 5 ms for one time, thereby performing the magnetizing operation on the gold bar. Thereafter, the gold bar was pulled out of the inner hole of the permalloy-steel cylindrical member, whereby there was obtained a magnetized gold member as a gold bar specimen 2.

For comparison, one of the two gold bars which are not subjected to the magnetizing operation described above was disposed in the magnetic field produced by the pulse magnetizing apparatus used in the magnetizing operation for obtaining the gold bar specimen 2, in a state in which the gold bar was not inserted into the inner hole of the permalloy-steel cylindrical member. In this state, the magnetizing operation was performed on the gold bar by producing the magnetic field three times using the pulse magnetizing apparatus, under the same conditions as those in the magnetizing operation for obtaining the gold bar specimen 2. Thus, there was obtained a magnetized gold bar as a comparative gold bar specimen 3. The last one of the gold bars which is not subjected to any magnetizing operation was used as a comparative gold bar specimen 4.

The magnetic flux density of each of the gold bar specimen 2 and the comparative gold bar specimens 3, 4 was measured using the same tesla meter as used in the Experiment 1 described above. The magnetic flux density of the gold bar specimen 2 was 0.02T while the magnetic flux density of the comparative gold bar specimens 3, 4 was 0.001T.

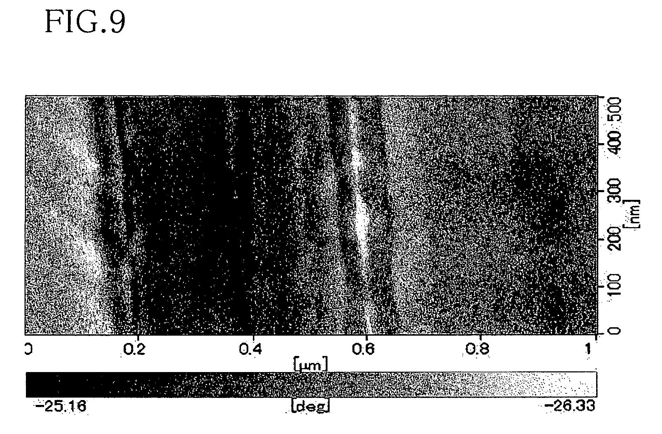

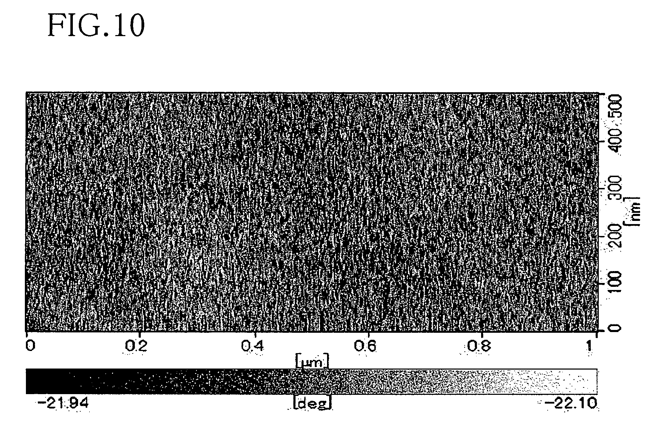

Subsequently, there were observed and measured of directions of respective magnetic domains in nano size in each of the gold bar specimen 2 and the comparative gold bar specimen 4 using MFM (Magnetic Force Microscope available form Seiko Instruments Inc., Japan). The observation and the measurement were carried out in a manner similar to that in the Experiment 1. The measurement results of the gold bar specimen 2 and the comparative gold bar specimen 4 are shown in Fig. 9 and Fig. 10, respectively.

As shown in Fig. 9, in the gold bar specimen 2 which was subjected to the magnetizing operation according to the method of the present invention, the directions of the respective magnetic domains in nano size are identical with each other, and the N-pole (black portions in Fig. 9) and the S-pole (white portions in Fig. 10) are observed. It is thus recognized that the gold bar specimen 2 was magnetized with high reliability. In contrast, as shown in Fig. 10, in the comparative gold bar specimen 4 which was not subjected to the magnetizing operation according to the method of the present invention, the directions of the respective magnetic domains in nano size are irregular or random, and no magnetic poles are generated. It is thus recognized that the comparative gold bar specimen 4 was not magnetized at all.

From the measurement results of the magnetic flux density in the gold bar specimen 2 and the comparative gold bar specimens 3, 4 and the measurement results using the MFM, it can be recognized that the bar made of the gold material that is one of the metal conventionally deemed impossible to be magnetized can be easily and reliably magnetized according to the method of the present invention.

### <Experiment 3>

Initially, a suitable amount of gold ore produced in Hishikari mine and containing 80g/t of gold was roughly pulverized by a known jaw crusher, thereby providing a roughly pulverized product. The thus obtained roughly pulverized product was further pulverized by a ball mill so as to have a size of not greater than 180 mesh, whereby there was obtained a mixture in which gold, silver, and nonmetal were mixed. Further, there was prepared, as the magnetic-vector-potential inductor, a permalloy-steel plate. As in the Experiment 2 mentioned above, the absolute value of the relative permeability of the permalloy-steel plate was 100000 times that of the gold. The absolute value of the relative permeability of the silver was 1.0, so that the absolute value of the relative permeability of the permalloy-steel plate was 100000 times that of the silver.

Subsequently, a suitable amount of the mixture containing the gold, the silver, and the nonmetal was covered with the permalloy-steel plate, and the magnetizing operation was performed on the mixture in a manner similar to that in the Experiment 2 using the pulse magnetizing apparatus. Thus, the gold and the silver in the mixture were magnetized.

Thereafter, a neodymium ·iron. boron magnet having the magnetic flux density of 0.5T was brought close to the mixture on which the magnetizing operation has been performed, such that magnetic force is applied to the mixture, whereby the magnetized gold and silver were separated by the magnetic force. As a result, the gold and the silver can be separated from the mixture. It is accordingly recognized that the gold and the silver that are conventionally deemed difficult or impossible to be magnetized can be easily and reliably magnetized in the mixture containing the nonmetal, according to the method of the present invention. It is further recognized that the thus magnetized gold and silver can be efficiently separated from the mixture by application of the magnetic force.

### <Experiment 4>

Initially, there was prepared 10 liters of waste liquid obtained after gold-plating and containing gold ions in a concentration of 10 ppm. Further, there was prepared a separating system having a structure shown in Fig. 4. As the permanent magnets installed on the magnetic-vector-potential inductor (the flow-path defining member) of the separating system, the neodymium • iron • boron magnets having the magnetic flux density of 1.2T were used. The magnetic-vector-potential inductor (the flow-path defining member) was constituted by a permalloy-steel plate.

The prepared waste liquid was introduced, via the inlet, into the first flow-path of the magnetic-vector-potential inductor of the separating system at a flow rate of 1 liter per minute. Thus, the gold ions contained in the waste liquid were magnetized in the first flow-path, and concentration gradient of the gold ions was caused in the waste liquid. In the waste liquid, the part containing the gold ions in high concentration was discharged through the second flow-path and the upper outlet and consequently collected while the part containing the gold ions in low concentration was discharged through the third flow-path and the lower outlet and consequently collected.

Thereafter, the concentration of the gold ions in the waste liquid collected through the upper outlet was measured using a plasma-emission spectrophotometer. The measured concentration was 7 pm. In the meantime, the concentration of the gold ions in the waste liquid collected through the lower outlet was similarly measured. The measured concentration was 3 ppm. It is clearly recognized from the results indicated above that the gold ions that are conventionally deemed difficult or impossible to be magnetized can be easily and reliably magnetized in the solution containing the gold ions and that the gold ions can be efficiently separated from the solution.

### <Experiment 5>

Initially, there were prepared: a CPU in which metal components such as gold bonding wires, a nickel lead frame and the like were covered with and sandwiched by a ceramic package as the nonmetallic covering member fixed thereto; and a permalloy-steel plate as the magnetic-vector-potential inductor. Further, the pulse magnetizing apparatus used in the Experiment 2 described above was prepared. The absolute value of the relative permeability of nickel was 1.0. Accordingly, the absolute value of the relative permeability of the permalloy-steel plate as the magnetic-vector-potential inductor was 100000 times that of the nickel.

After the thus prepared CPU was covered with the permalloy-steel plate, the CPU was subjected to the magnetizing operation using the pulse magnetizing apparatus in a manner similar to that in the Experiment 2, whereby the gold bonding wires and the nickel lead frame in the CPU were magnetized. In this instance, the volumes of the gold bonding wires and the nickel lead frame were increased by Barret effect caused by the magnetization, thereby breaking the ceramic package into fragments. Thus, there was obtained a mixture in which are mixed the fragments of the ceramic package and the gold bonding wires and the nickel lead frame.

Thereafter, a neodymium • iron • boron magnet having the magnetic flux density of 0.5 T was brought close to the mixture containing the fragments of the broken ceramic package and the magnetized gold bonding wires and nickel lead frame, such that the magnetic force is applied to the mixture, whereby the magnetized gold bonding wires and nickel lead frame were separated from the fragments of the ceramic package by the magnetic force. According to the method of the present invention, the nickel and the gold (that is conventionally deemed difficult or impossible to be magnetized) which are covered with the nonmetallic covering member can be easily and reliably magnetized while the nonmetallic covering member can be broken. Further, the nickel and the gold can be efficiently separated from the nonmetallic covering member owing to the magnetic force.

## Claims

1. A method of magnetizing metal, **characterized by** comprising the steps of
positioning metal to be magnetized (22; 34; 38; 68) in a magnetic field produced by magnetic vector potential; and
positioning, in the magnetic field, at least one magnetic-vector-potential inductor (12; 28; 42,43) which induces the magnetic vector potential, such that the at least one magnetic-vector-potential inductor is located adjacent to the metal for magnetizing the metal, the at least one magnetic-vector-potential inductor having relative permeability whose absolute value is larger than an absolute value of relative permeability of the metal.

2. A method of separating metal from a mixture of the metal and nonmetal, **characterized by** comprising the steps of
positioning a mixture of metal (34) and nonmetal (36) in a magnetic field produced by magnetic vector potential;
magnetizing the metal in the mixture by positioning, in the magnetic field, at least one magnetic-vector-potential inductor (28) which induces the magnetic vector potential that produces the magnetic field, such that the at least one magnetic-vector-potential inductor is located adjacent to the mixture, the at least one magnetic-vector-potential inductor having relative permeability whose absolute value is larger than an absolute value of relative permeability of the metal in the mixture; and
separating the metal from the nonmetal by applying magnetic force to the metal which has been magnetized in the step of magnetizing the metal, so that the metal is separated from the mixture.

3. A method of separating metal from a solution containing the metal, **characterized by** comprising the steps of:
positioning a solution (40) containing metal (38) in a magnetic field produced by magnetic vector potential;
magnetizing the metal in the solution by positioning, in the magnetic field, at least one magnetic-vector-potential inductor (42, 43) which induces the magnetic vector potential that produces the magnetic field, such that the at least one magnetic-vector-potential inductor is located adjacent to the solution, the at least one magnetic-vector-potential inductor having relative permeability whose absolute value is larger than an absolute value of relative permeability of the metal in the solution;
causing concentration gradient of the metal in the solution containing the metal which has been magnetized in the step of magnetizing the metal, by applying the magnetic vector potential to the solution; and
separating the solution in which the concentration gradient of the metal has been caused in the step of causing concentration gradient, into a high-metal-concentration solution part and a low-metal-concentration solution part, so that the metal is separated from the solution.

4. A method of separating metal covered with a nonmetallic material from the nonmetallic material, **characterized by** comprising the steps of
positioning metal (68) covered with a nonmetallic material (68) in a magnetic field produced by magnetic vector potential;
magnetizing the metal by positioning, in the magnetic field, at least one magnetic-vector-potential inductor (28) which induces the magnetic vector potential that produces the electric field, such that the at least one magnetic-vector-potential inductor is located adjacent to the metal, the at least one magnetic-vector-potential inductor having relative permeability whose absolute value is larger than an absolute value of relative permeability of the metal;
releasing the metal from the nonmetallic material by breaking the nonmetallic material as a result of increase in a volume of the metal owing to Barret effect caused by magnetization of the metal; and
separating the metal from the nonmetallic material by applying magnetic force to the metal which has been magnetized in the step of magnetizing the metal and which has been released from the nonmetallic material.

5. The method according to any one of claims 1-4, wherein the absolute value of the relative permeability of the at least one magnetic-vector-potential inductor is not larger than 1000000 times the absolute value of the relative permeability of the metal to be magnetized.

6. The method according to any one of claims 1-4, wherein the at least one magnetic-vector-potential inductor is superposed on the metal to be magnetized in a direction perpendicular to a plane formed by the magnetic vector potential, so that the at least one magnetic-vector-potential inductor is located adjacent to the metal so as to be in contact therewith in the magnetic field.

7. The method according to any one of claims 1-4, wherein the at least one magnetic-vector-potential inductor is opposed to the metal to be magnetized in a direction perpendicular to a plane formed by the magnetic vector potential, so that the at least one magnetic-vector-potential inductor is located adjacent to the metal so as to be out of contact therewith.

8. The method according to any one of claims 1-4, wherein the at least one magnetic-vector-potential inductor encloses the metal to be magnetized, so that the at least one magnetic-vector-potential inductor is located adjacent to the metal.

9. The method according to any one of claims 1-4, wherein the at least one magnetic-vector-potential inductor is enclosed with the metal to be magnetized, so that the at least one magnetic-vector-potential inductor is located adjacent to the metal.

10. The method according to any one of claims 1-4, wherein the magnetic field is produced by the magnetic vector potential generated using at least one permanent magnet (14; 56).

11. The method according to any one of claims 1-4, wherein the magnetic field is produced by the magnetic vector potential generated by application of an electric current to at least one coil.

12. The method according to claim 4, wherein the step of magnetizing the metal and the step of releasing the metal from the nonmetallic material are conducted at the same time.

13. A magnetizing apparatus (10) which produces a magnetic field for magnetizing metal in the magnetic field, the magnetizing apparatus being **characterized by** comprising:
a magnetic-field producing device (11; 26) which generates magnetic vector potential and which produces the magnetic field by the magnetic vector potential; and
at least one magnetic-vector-potential inductor (12; 28; 42, 43) which is located adjacent to metal to be magnetized (22; 34; 38; 68) in the magnetic field produced by the magnetic-field producing device, for thereby inducing the magnetic vector potential to the metal and which has relative permeability whose absolute value is larger than an absolute value of relative permeability of the metal.
